# NEUE EUROPÄISCHE PATENTSCHRIFT

(11) **EP 0 997 338 B2**
(45) Veröffentlichungstag und Bekanntmachung des Hinweises auf die Entscheidung über den Einspruch: **03.01.2007**
(45) Hinweis auf die Patenterteilung: 17.12.2003
(21) Anmeldenummer: 99120035.3
(22) Anmeldetag: 18.10.1999
(51) Int. Cl.: B60K 35/00, G01D 13/08

(54) **Zeigerinstrument**
Pointer instrument
Indicateur à aiguille

(30) Priorität: 26.10.1998 DE 19849161
(43) Veröffentlichungstag der Anmeldung: 03.05.2000
(73) Patentinhaber: SIEMENS AKTIENGESELLSCHAFT, 80333 München (DE)
(72) Erfinder: Zech, Stephan, 65343 Eltville (DE); Friepes, Gerhard, 61231 Bad Nauheim (DE); Ludewig, Bernd, 69493 Hirschberg (DE); Haas, Hermann, 63916 Amorbach (DE)

(56) Entgegenhaltungen:
- EP-A- 0 492 543
- EP-A- 0 900 686
- EP-A- 0 985 912
- WO-A-97/40347
- JP-A- 4 223 222
- US-A- 3 480 861
- US-A- 4 473 304

## Beschreibung

Die Erfindung betrifft ein Kraftfahrzeuginstrument nachdem Oberbegriff des Anspruchs 1.

Zeigerinstrumente der vorstehenden Art werden beispielsweise als Tachometer oder Drehzahlmesser in heutigen Kraftfahrzeugen eingesetzt. Zur besseren Ablesbarkeit ist es dabei wünschenswert, wenn das Zeigerinstrument einen möglichst großen Durchmesser aufweist. Nachteilig wirkt sich dabei aus, dass der von einer Skala eingeschlossenene, innere Bereich von einer Zeigerfahne überstrichen wird und daher für weitere Anzeigen nur eingeschränkt zur Verfügung steht, weil dieZeigerfahne je nach Winkelstellung unterschiedliche Bereiche abdeckt. Weiterhin wirkt sich nachteilig aus, dass eine die Zeigerfahne auslenkende Zeigerwelle den zentralen Bereich des Zeigerinstrumentes durchbricht. Insbesondere bei Einsatz großflächiger LCD-Anzeigen ist die erforderliche Durchbrechung für die Zeigerwelle mit erheblichen fertigungstechnischen Problemen verbunden.

Es sind auch Ausführungsformen von Zeigerinstrumenten bekannt, bei denen eine zentrale Durchbrechung für die Zeigerwelle dadurch vermieden wird, dass die Zeigerfahne doppelt gekröpft ausgeführt ist und so in einem mittleren Bereich zunächst hinter der Anzeige entlanggeführt wird und nur im Randbereich des Zeigerinstrumentes für den Betrachter sichtbar ist. Solche Ausführungsformen bedingen relativ lange Zeiger und führen zu beträchtlichen Zeigergewichten. Dieses Gewicht wird aufgrund des zum Massenausgleich notwendigen Gegengewichts auf der dem Zeiger gegenüberliegenden Seite der Zeigerwelle oftmals so hoch, dass das Drehmoment heutiger Messwerke nicht mehr ausreicht, um den Zeiger rasch genug oder überhaupt zu bewegen. Wählt man für den Zeiger einen geringeren Querschnitt, um ihn leichter auszubilden, dann gerät derZeiger durch Schwingungen, wie sie beispielsweise in einem Kraftfahrzeug unvermeidlich sind, ebenfalls ins Schwingen, wodurch das Ablesen des Zeigerinstrumentes erschwert und ein minderwertiger Eindruck vermittelt wird sowie die Gefahr eines Verklemmens des Zeigers entsteht.

Ein gattungsgemässes Zeigerinstrument ist aus JP 4 223 222 bekannt.

Der Erfindung liegt das Problem zugrunde, ein Zeigerinstrument der eingangs genannten Art so zu gestalten, dass Schwingungen vermieden werden können und zugleich der mittlere Bereich des Instruments für weitere Anzeigen nutzbar ist. Dabei soll die Ablesbarkeit nicht durch einen über der Anzeige verschwenkten Zeiger behindert werden.

Dieses Problem wird erfindungsgemäß durch die Merkmale des Anspruchs 1 gelöst. Durch die außermittige Lagerung ist es möglich, auf eine zentrale Zeigerwelle oder Achse zu verzichten und dennoch die übliche, kreisförmige Schwenkbewegung zu erreichen. Der durch die Bewegungsbahn des Zeigers eingeschlossene, zentrale Bereich kann daherfrei von Durchbrechungen ausgeführt werden, so dass insbesondere großflächige Anzeigen, wie beispielsweise LCD-Anzeigen, problemlos dort angeordnet werden können. Zugleich kann der Zeigerantrieb neben dem Tragkörper angeordnet sein, wodurch sich eine flache Bauform erreichen lässt. Dabei kann die Lagerung in einer mit der Ebene des Zeigers oder des Tragkörpers gemeinsamen Ebene angeordnet sein, wodurch ein Kippmoment vermieden und die Empfindlichkeit gegenüber Schwingungen reduziert werden kann. Der Tragkörper kann hierbei zusätzlich eine zentrale, die Ebene eines Zifferblattes oder der Anzeige nicht durchdringende Führung aufweisen.

Der Zeigerantrieb weist ein in den Tragkörper eingreifendes Zahnrad auf. Hierdurch lässt sich eine einfache und zugleich zuverlässige Kraftübertragung erreichen. Die zur Auslenkung des Tragkörpers erforderlichen Antriebskräfte sind hierbei aufgrund der vergleichsweise geringen Reibung problemlos übertragbar.

Besonders günstig ist hierbei eine Ausführungsform der Erfindung, bei der die Lagerung drei über den Umfang des Tragkörpers in etwa gleichmäßig verteilte Lagerstellen aufweist. Hierdurch lässt sich eine exakte Führung des Tragkörpers erreichen, wobei die Bewegungsbahn des Tragkörpers kreisförmig ausgeführt sein kann. Diese Lagerstellen können beispielsweise auch gegenüber dem Tragkörpervorgespannt sein, um so mögliche Toleranzen auszugleichen.

Vorteilhaft ist es hierbei auch, wenn eine der drei Lagerstellen zugleich mit dem Zeigerantrieb verbunden ist. Hierdurch kann eine Lagerstelle eingespart werden, indem der Zeigerantrieb zugleich auch die Funktion einer Lagerstelle übernimmt. Hierdurch lässt sich der Herstellungsaufwand und der erforderliche Einbauraum reduzieren.

Hierzu ist es besonders vorteilhaft, wenn der Zeigerantrieb am Umfang des Tragkörpers eingreift. Dadurch kann der Zeigerantrieb unmittelbar außenseitig an dem Tragkörper angeordnet werden, wobei diese insbesondere auch in einer gemeinsamen Ebene angeordnet sein können. Das Zeigerinstrument kann daher eine lediglich geringe Bauhöhe aufweisen. Der Zeigerantrieb kann auch in einem gegenüber dem sichtbaren Bereich des Tragkörpers zurückgesetzten Randbereich des Umfangs angeordnet sein, wodurch ein ansprechendes optisches Erscheinungsbild erreicht wird. Insbesondere bleibt für den Betrachter der Zeigerantrieb unsichtbar.

Eine andere vorteilhafte Ausführungsform der Erfindung ist dadurch gegeben, dass der Zeigerantrieb an einer dem Betrachter abgewandten Seite des Tragkörpers in diesen eingreift. Hierzu kann der Zeigerantrieb beispielsweise auch mit einem Kegelrad ausgerüstet und in einem rückwärtigen Bereich des Tragkörpers angeordnet sein. Dabei ist der Zeigerantrieb von dem Tragkörper abgedeckt und somit außerhalb des für den Betrachter sichtbaren Bereichs angeordnet. Die zur Verfügung stehende Fläche des Zeigerinstrumentes kann damit optimal bis in die Randbereiche hinein genutztwerden. Denkbar sind zugleich auch mehrere konzentrische Tragkörper, die jeweils von einem separaten Zeigerantrieb auslenkbar sind.

Eine besonders vorteilhafte Weiterbildung der Erfindung ist dann gegeben, wenn der Tragkörper eine im wesentlichen zentrale Durchbrechung aufweist. Diese Durchbrechung ermöglicht einen ungehinderten Blick auf eine dahinter liegende, zusätzliche Anzeige. Diese kann auch in einer mit dem Tragkörper gemeinsamen Ebene angeordnet sein oder auch gegenüber dem Tragkörper hervortreten. Möglich ist auch die Anordnung einer Durchbrechung, die in Abhängigkeit der Zeigerstellung eine bestimmte, dahinter befindliche Anzeige freigibt um so das Erreichen einer bestimmten Zeigerstellung zu verdeutlichen oder die für die jeweilige Zeigerstellung irrelevanten Anzeigen auszublenden.

Der Tragkörper könnte eine beliebige, beispielsweise auch gewölbte, Oberfläche oder Beschaffenheit aufweisen. Besonders vorteilhaft ist es jedoch, wenn der Tragkörper als eine im wesentlichen flache Scheibe ausgeführt ist. Hierdurch lässt sich eine kompakte Bauform des Anzeigeinstrumentes erreichen. Der Zeiger kann hierbei beispielsweise auf dem Tragkörper aufgedruckt sein oder als separates Bauteil mit diesem verbunden sein. Der Zeiger kann hierbei neben einer Zeigerfahne auch andere Formen aufweisen. Beispielsweise kann der Zeiger als Bandzeiger ausgeführt oder mit Ziffern und Symbolen versehen sein.

Der Tragkörper kann hierzu eine weitgehend beliebige Bewegungsbahn ausführen, die beispielsweise ellipsenförmig sein kann, um so bestimmte Zeigerstellungen optisch hervorzuheben. Besonders vorteilhaft ist es jedoch, wenn der Tragkörper im wesentlichen kreisscheibenförmig ausgeführt ist. Ein derart ausgeführter Tragkörper ermöglicht eine kreisförmige Bewegungsbahn des Zeigers, die dem Betrachter geläufig und somit für ihn leicht ablesbar ist. Insbesondere ist das Erscheinungsbild eines derart ausgeführten Anzeigeinstrumentes gegenüber einem bekannten Anzeigeinstrument mit einer zentralen Zeigerwelle unverändert. Dabei sind auch als Kreissegment ausgeführte Tragkörper darstellbar.

Eine besonders günstige Weiterbildung der Erfindung ist dadurch gegeben, dass der Tragkörper ein Kreisring ist. Bei einem solchen Tragkörper können mehrere der Tragkörper konzentrisch angeordnet und unabhängig voneinander angetrieben werden, so dass auch auf kleinen Flächen eine Vielzahl von Informationen übersichtlich visualisiert werden können. Der Zeigerantrieb kann dabei beispielsweise auch in rückseitige Nuten oder Vorsprünge des jeweiligen Tragkörpers eingreifen, um so eine Behinderung der benachbarten Tragkörper auszuschließen.

Eine andere, besonders vorteilhafte Ausführungsform der Erfindung ist dadurch gegeben, dass der Tragkörper zumindest in einem Teilbereich transparent ausgeführt ist. Hierdurch kann der Tragkörper als eine die darunter liegende Anzeige überdeckende, transparente Scheibe ausgeführt sein, die an ihrem Randbereich mit dem Zeiger versehen ist. Dabei kann der Tragkörper eine Lichteinkoppelfläche aufweisen und so zugleich die Funktion eines Lichtleiters zur Beleuchtung einer Skala, des Zeigers oder sonstiger Elemente des Anzeigeinstrumentes erfüllen.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigt in
- Fig. 1: eine Draufsicht eines Zeigerinstrumentes mit einem Tragkörper und einem Zeigerantrieb,
- Fig. 2: eine Draufsicht auf das Zeigerinstrument im Betriebszustand,
- Fig. 3: eine Draufsicht eines weiteren Zeigerinstrumentes.

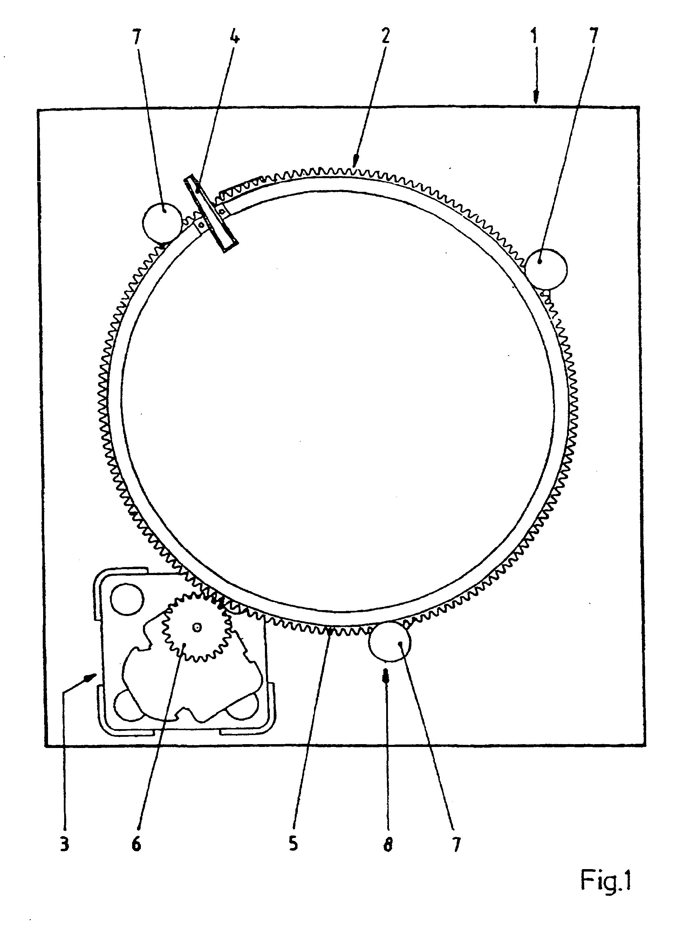

Figur 1 zeigt in einer Draufsicht ein Zeigerinstrument 1 mit einem Tragkörper 2, welcher mittels eines Zeigerantriebes 3 verdrehbar ist. Der Zeigerantrieb 3 und der Tragkörper 2 sind im betriebsbereiten Zustand von einer zur besseren Übersichtlichkeit nicht dargestellten Abdeckung, insbesondere einem Zifferblatt mit einer Skala, abgedeckt, so dass für den Betrachter lediglich ein mit dem Tragkörper 2 verbundener Zeiger 4 sichtbar ist. Der als Kreisring ausgeführte Tragkörper 2 hat außenseitig einen Zahnkranz 5, in welchen ein Zahnrad 6 des Zeigerantriebes 3 eingreift. Der Tragkörper 2 ist mittels einer Lagerung 8, welche drei über den Umfang des Tragkörpers 2 in etwa gleichmäßig verteilte Lagerstellen 7 umfasst, gelagert. Der von dem Tragkörper 2 ausgesparte, innere Bereich ist daher frei von Durchbrechungen, wie sie insbesondere bei zentral gelagerten Zeigerinstrumenten für eine Zeigerwelle unvermeidbar sind.

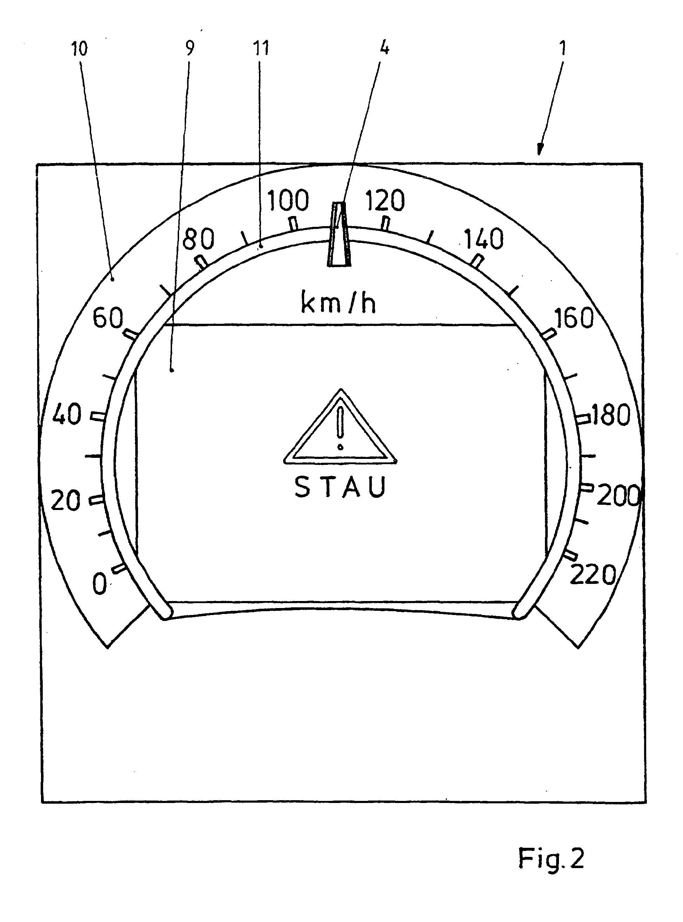

Eine Draufsicht auf das Zeigerinstrument 1 in seiner betriebsbereiten Position zeigt Figur 2. Hierbei ist in dem von dem Zeiger 4 begrenzten, inneren Bereich des Zeigerinstrumentes 1 eine als LCD-Anzeige ausgeführte Anzeige 9 angeordnet, die beispielsweise zur Darstellung von Verkehrsinformationen dient. Die Anzeige 9 bleibt dabei unabhängig von der Winkelstellung des Zeigers 4, der eine Fahrgeschwindigkeit eines Kraftfahrzeugs anzeigt, ablesbar, so dass eine optimale Nutzung des verfügbaren Platzangebotes erreicht wird. In der gleichen Ebene wie die Anzeige 9 ist ein Zifferblatt mit einer Skala 10 angeordnet, über die der Zeiger 4 im Bereich einer Aussparung 11 bewegt werden kann. Andere Ausführungen, bei denen zusätzlich auch der Zeiger 4 in einer gemeinsamen Ebene schwenkbar ist oder bei denen die Anzeige 9 und die Skala 10 in unterschiedlichen Ebenen angeordnet sind, können dabei ebenfalls erreicht werden.

Nicht dargestellt ist eine abgewandelte Ausführungsform, bei der ein Zeiger auf einem kreisscheibenförmigen Tragkörper aufgebracht ist, welcher im Bereich einer zentralen Anzeige transparent ausgeführt ist. Hierzu kann der Tragkörper auch eine zentrale Achse oder Welle als Führungshilfe aufweisen, welche die Anzeige hierzu nicht zu durchdringen braucht.

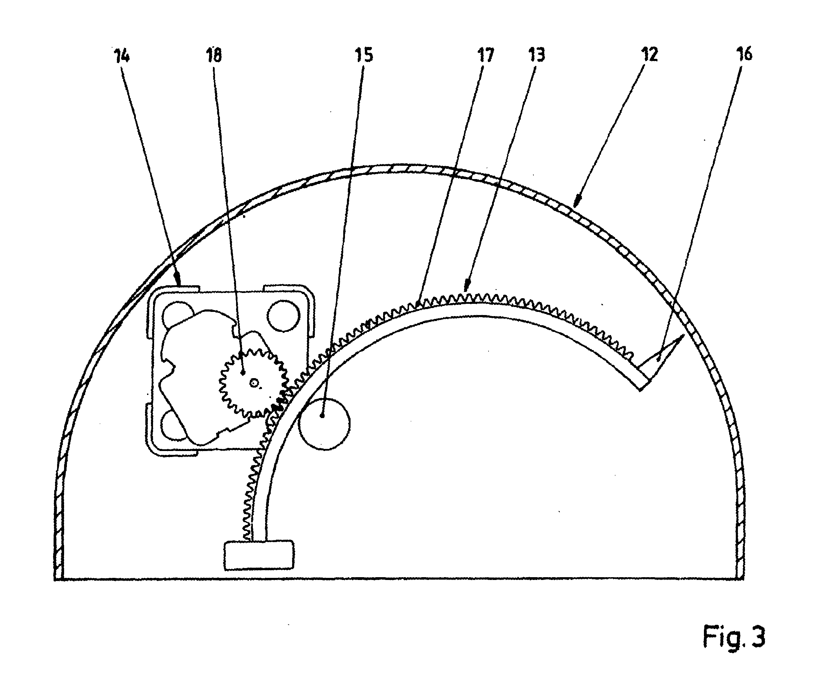

Figur 3 zeigt eine einfache Ausführungsform eines weiteren Zeigerinstrumentes 12. Hierbei ist ein Tragkörper 13 zwischen einem Zeigerantrieb 14 und einer Lagestelle 15 verfahrbar angeordnet, wobei ein an dem Tragkörper 13 angeordneter Zeiger 16 eine im Wesentlichen kreisförmige Schwenkbewegung ausführt. Der Tragkörper 13 hat außenseitig eine Zahnreihe 17, in die ein Zahnrad 18 des Zeigerantriebes 14 eingreift. Dieser ist als Schrittmotor ausgeführt, so dass ein zusätzlicher Nullstellenabgleich entfallen kann. Der Tragkörper 13 kann auch eine weitgehend beliebige Formgebung aufweisen und ermöglicht so eine an den individuellen Verwendungszweck anpassbare Bewegungsbahn. Ebenfalls kann der mittels des Zeigerantriebes 14 aufgebrachte Vortrieb des Tragkörpers 13 je nach Auslenkungswinkel unterschiedlich sein und so in einem vorbestimmten Bereich eine unterschiedliche Skalierung ermöglichen.

## Patentansprüche

1. Kraftfahrzeuginstrument mit einem Zeigerantrieb (3, 14) zur Auslenkung eines Transmissionsteiles (2, 13), das eine dezentrale Lagerung (8) aufweist,
**wobei**
an dem Transmissionsteil (2, 13) ein zur Darstellung von Messwerten entlang einer Skala (10) beweglicher Zeiger (4, 16) vorgesehen ist,
**wobei**
das Transmissionsteil als Tragkörper (2, 13) formstabil ausgebildet ist **dadurch gekennzeichnet, daß** der Zeigerantrieb (3, 14) mit einem Zahnrad (6) in den Tragkörper (2, 13) eingreift.

2. Zeigerinstrument nach Anspruch 1, **dadurch gekennzeichnet, dass** die Lagerung (8) drei über den Umfang des Tragkörpers (2) in etwa gleichmäßig verteilte Lagerstellen (7) aufweist.

3. Zeigerinstrument nach Anspruch 2, **dadurch gekennzeichnet, dass** eine der drei Lagerstellen (7) zugleich mit dem Zeigerantrieb (3) verbunden ist.

4. Zeigerinstrument nach einem der vorhergehenden Ansprüche, **dadurch gekennzeichnet, dass** der Zeigerantrieb (3, 14) am Umfang des Tragkörpers (2, 13) eingreift.

5. Zeigerinstrument nach einem der vorhergehenden Ansprüche, **dadurch gekennzeichnet, dass** der Zeigerantrieb (3, 14) an einer dem Betrachter abgewandten Seite des Tragkörpers (2, 13) in diesen eingreift.

6. Zeigerinstrument nach zumindest einem der vorhergehenden Ansprüche, **dadurch gekennzeichnet, dass** der Tragkörper (2, 13) eine im wesentlichen zentrale Durchbrechung aufweist.

7. Zeigerinstrument nach einem der vorhergehenden Ansprüche, **dadurch gekennzeichnet, dass** der Tragkörper (2, 13) als eine im wesentlichen flache Scheibe ausgeführt ist.

8. Zeigerinstrument nach einem der vorhergehenden Ansprüche, **dadurch gekennzeichnet, dass** der Tragkörper (2, 13) im wesentlichen kreisscheibenförmig ausgeführt ist.

9. Zeigerinstrument nach einem der vorhergehenden Ansprüche, **dadurch gekennzeichnet, dass** der Tragkörper (2, 13) ein Kreisring ist.

10. Zeigerinstrument nach einem der vorhergehenden Ansprüche, **dadurch gekennzeichnet, dass** der Tragkörper (2, 13) zumindest in einem Teilbereich transparent ausgeführt ist.

## Claims

1. Motor vehicle instrument having a pointer drive (3, 14) for deflecting a transmission part (2, 13) which has a decentral mounting (8), a pointer (4, 16) that can be moved along a scale (10) for the purpose of displaying measured values being provided on the transmission part (2, 13), the transmission part being designed in a dimensionally stable manner as a supporting element (2, 13), **characterized in that** the pointer drive (3, 14) engages by means of a gearwheel (6) in the supporting element (2, 13).

2. Pointer instrument according to Claim 1, **characterized in that** the mounting (8) has three bearing points (7) distributed approximately uniformly over the circumference of the supporting element (2).

3. Pointer instrument according to Claim 2, **characterized in that** one of the three bearing points (3) is at the same time connected to the pointer drive (3).

4. Pointer instrument according to one of the preceding claims, **characterized in that** the pointer drive (3, 14) engages at the circumference of the supporting element (2, 13).

5. Pointer instrument according to one of the preceding claims, **characterized in that** the pointer drive (3, 14) engages in the supporting element (2, 13) on a side thereof facing away from the viewer.

6. Pointer instrument according to at least one of the preceding claims, **characterized in that** the supporting element (2, 13) has an essentially central aperture.

7. Pointer instrument according to one of the preceding claims, **characterized in that** the supporting element (2, 13) is designed as an essentially flat disc.

8. Pointer instrument according to one of the preceding claims, **characterized in that** the supporting element (2, 13) is shaped essentially like a circular disc.

9. Pointer instrument according to one of the preceding claims, **characterized in that** the supporting element (2, 13) is a circular ring.

10. Pointer instrument according to one of the preceding claims, **characterized in that** the supporting element (2, 13) is designed to be transparent, at least in a subarea.

## Revendications

1. Instrument pour véhicule automobile avec un entraînement d'aiguille (3, 14) pour mouvoir une pièce de transmission (2, 13), présentant un logement décentralisé (8), une aiguille (4, 16), destinée à représenter des valeurs de mesure et mobile le long d'une graduation (10), étant prévue sur la pièce de transmission (2, 13), la pièce de transmission étant conçue sous forme d'organe support (2, 13) indéformable, **caractérisé en ce que** l'entraînement d'aiguille (3, 14) s'engrène dans l'organe support (2, 13), par l'intermédiaire d'une roue dentée (6).

2. Instrument à aiguille selon la revendication 1,
**caractérisé en ce que**
le logement (8) est muni de trois points d'appui (7), répartis de manière quasiment uniforme sur le pourtour de l'organe support (2).

3. Instrument à aiguille selon la revendication 2,
**caractérisé en ce que**
l'un des trois points d'appui (7) est également relié à l'entraînement d'aiguille (3).

4. Instrument à aiguille selon l'une quelconque des revendications précédentes,
**caractérisé en ce que**
l'entraînement d'aiguille (3, 14) s'engrène sur le pourtour de l'organe support (2, 13).

5. Instrument à aiguille selon l'une quelconque des revendications précédentes,
**caractérisé en ce que**
l'entraînement d'aiguille (3, 14) s'engrène dans l'organe support (2, 13) sur un côté de ce dernier qui est détourné de l'observateur.

6. Instrument à aiguille selon au moins l'une quelconque des revendications précédentes,
**caractérisé en ce que**
l'organe support (2, 13) présente un perçage sensiblement central.

7. Instrument à aiguille selon l'une quelconque des revendications précédentes,
**caractérisé en ce que**
l'organe support (2, 13) est réalisé sous la forme d'un disque sensiblement plat.

8. Instrument à aiguille selon l'une quelconque des revendications précédentes,
**caractérisé en ce que**
l'organe support (2, 13) est réalisé sous forme de disque sensiblement circulaire.

9. Instrument à aiguille selon l'une quelconque des revendications précédentes,
**caractérisé en ce que**
l'organe support (2, 13) est un anneau circulaire.

10. Instrument à aiguille selon l'une quelconque des revendications précédentes,
**caractérisé en ce que**
l'organe support (2, 13) est réalisé de manière transparente dans au moins une zone partielle.
